Europäisches Patentamt

European Patent Office

Office européen des brevets

(11) Publication number: **0 178 274**
**A2**

(12) **EUROPEAN PATENT APPLICATION**

(21) Application number: 85850305.5

(22) Date of filing: 01.10.85

(51) Int. Cl.⁴: **F 16 L 33/00**

(30) Priority: 01.10.84 SE 8404896

(71) Applicant: **FORSHEDA INNOVATION AB,**
**S-330 12 Forsheda (SE)**

(43) Date of publication of application: 16.04.86
**Bulletin 86/16**

(72) Inventor: **Hällstedt, Göran, Ekelundsvägen 5,**
**S-342 00 Alvesta (SE)**
Inventor: **Sporre, Anders, Gjuterigatan 11,**
**S-331 00 Värnamo (SE)**

(84) Designated Contracting States: **AT BE CH DE FR GB IT LI NL**

(74) Representative: **Linde, Leif, Vernamo Patentbyrä AB**
**P.O. Box 1, S-270 11 Abbekas (SE)**

(54) A device for connecting a thin-walled hose with a pipe-shaped element.

(57) A device for connecting a preferably thin-walled hose (2) with a pipe-shaped element (6) which is positioned inside the hose comprises a clamping device (12) which is adapted to enclose a portion of the hose and press this portion against the pipe-shaped element. The clamping device comprises two clamping rings, an outer clamping ring (14) and an inner clamping ring (16) engaging each other at conical surfaces, the inner clamping ring (16) being adapted to engage the hose and to be forced against the hose by means of axial displacement of the outer ring in relation to the inner ring along the conical surfaces.

The present invention relates to a device for connecting a preferably thin-walled hose with a pipe-shaped element.

It is previously known to restore damaged pipes consisting of metal, plastic, concrete or the like positioned below the ground surface by drawing a lining consisting of a relatively thin-walled hose into the pipes. Thereby, it is necessary tightly to connect the ends of the hose with pipe elements and with the undamaged piping at opposite sides of the damaged section thereof into which the hose is drawn. The fact that the hose has a relatively thin wall and is constructed so as to be radially expansible in order to connect with the inner surface of the piping into which the hose has been drawn when pressure is applied to the hose has caused problems with regard to the construction of devices for connecting the hose with the undamaged sections of the piping.

In accordance therewith it is an object of the present invention to provide a connection device suitable for said purpose.

In order to comply with this object there is provided a device for connecting a preferably thin-walled hose with a pipe-shaped element, which is positioned inside the hose, comprising a clamping device adapted to enclose a portion of the hose and pressing said portion of the hose against the pipe-shaped element, the connection device according to the invention being characterized in that the clamping device comprises two clamping rings, an outer clamping ring and an inner clamping ring, contacting each other at conical surfaces, said inner clamping ring being adapted to engage the hose and to be forced against the hose by means of axial displacement of the outer ring in relation to the inner ring along the conical surfaces.

Thereby, the inner clamping ring is preferably adapted to provide high friction against the outer surface of the hose which can be provided by the fact that the inner surface of the clamping ring is formed with projections consisting of teeth or grooves or by manufacturing the inner surface of a layer of a material having high friction against the hose.

In an embodiment of the invention the inner clamping ring comprises a continuous inner portion consisting of a radially expansible material and an axially at least partially slotted outer portion of a rigid material.

The thin-walled hose can be connected with a coupling member which is in turn connected with the end portion of a piping either by the fact that the outer clamping ring is provided with a connecting portion, for example a flange, or by the fact that the pipe element positioned in the thin-walled hose is provided with such a connecting portion, for example a flange, which is connected with the end portion of the piping.

The invention is described in the following with reference to the accompanying drawings.

Fig. 1 is an axial section of an embodiment of a device according to the invention.

Fig. 2 is an axial section of a modified embodiment of a part included in the device according to Fig. 1.

Figs 3a and 3b are axial sections of another embodiment of a device according to the invention into different mounting stages.

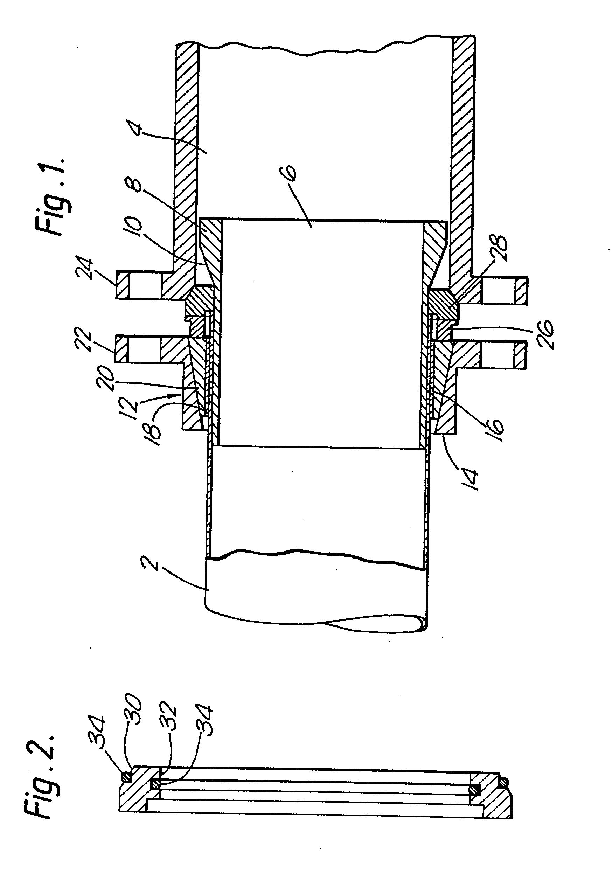

The device shown in Fig. 1 is intended for providing a connection between a hose 2 and a pipe element 4. The hose 2 is relatively thin-walled and is adapted to constitute a lining in a damaged piping or the like. The hose 2 can in a manner know per se consist of an inner sealing layer and an outer layer taking up the pressure. Thereby, the inner layer preferably consists of rubber and the outer layer preferably consists of fabric. It is also possible to apply a protective rubber layer outside the layer consisting of fabric. It is for example possible to draw the hose 2 into a leaky water pipe in order to form a tight lining therein. It is thereby suitable that the hose is in a previously known manner constructed so that it is forced against the original inner surface of the piping when the pressure is applied.

The pipe element 4 is suitably consisting of a pipe coupling adapted to be connected with an undamaged section of the piping with which it is necessary tightly to connect the hose 2 drawn into the damaged section in order to restore the tight condition of the piping as a whole. However, it is also possible to let the pipe element constitute the end portion of the undamaged section of the piping.

The device according to the invention shown in Fig. 1 comprises a pipe-shaped element 6 positioned in the thin-walled hose 2 and having a thickened portion 8 forming a conical outer surface 10. The device also comprises a clamping device 12 enclosing a portion of the hose 2 and forcing this portion of the hose against the pipe-shaped element 6. The clamping device 12 consists of two portions, an outer clamping ring 14 and an inner clamping ring 16. The clamping rings 14 and 16 contact each other along conical surfaces and it is realized that it is possible to provide a reduction of the inner diameter of the clamping device by displacing the two clamping rings 14 and 16 in relation to each other along the conical surface in order to press the hose 2 against the pipe-shaped element 6. The inner clamping ring 16 comprises an inner portion 18 of a radially expansible material and an outer portion 20 of a rigid material, which is axially slotted along a preferably zig-zag-shaped groove. Thereby, also the outer portion 20 has a changeable inner diameter in spite of the fact that it consists of rigid material. The outer clamping ring 14 comprises a peripheral flange 22 by means of which the outer clamping ring 14 is connectable with a corresponding flange 24 on the pipe element 4.

Between the clamping device 2 and the pipe element 4 there is provided an intermediate ring 26 axially engaging the inner clamping ring 16 and a sealing ring 28 engaging at its inner surface the outer surface of the annular element 6 and having a conical outer surface engaging an opposite conical surface at the inner edge of the end of the pipe element 4. It is also possible to let the intermediate ring 26 and the sealing ring 28 constitute one single unit.

As appears from Fig. 2 the sealing ring 28 can be provided with grooves at its surface 30 which is contacting the conical surface of the pipe element and also is conical as well as at its inner surface 32 which engages the pipe-shaped element 6, in which grooves O-rings 34 are positioned in order to provide an efficient sealing against the pipe element 4 and the pipe-shaped element 6, respectively. As an alternative the surfaces 30 and 32 of the sealing ring 28 can be covered with rubber sheet in order to provide said sealing effect.

The connection of the hose 2 with the pipe element 4 by means of the device according to the invention is conducted in the following way.

The outer clamping ring 14 and the inner clamping ring 16 are positioned on the hose 2. The sealing ring 28 and the intermediate ring 26 are positioned on the pipe-shaped element 6, the sealing ring 28 being so positioned that its conical surface 30 matches the conical surface of the pipe element 4.

The hose 2 is thereupon forced onto the pipe-shaped element to a position in which the end surface of the hose engages the sealing ring 28 in turn being positioned adjacent the conical outer surface 10 of the thickened portion 8 of the pipe-shaped element 6. The two clamping rings 14 and 16 of the clamping device 12 are separately displaced onto the portion of the hose 2 in which the pipe-shaped element 6 is positioned, whereupon the outer clamping ring 14 is forced over the inner clamping ring 16 as far as possible.

Thereupon, the flange 22 of the outer clamping ring 14 is secured to the flange 24 of the pipe element 4 by means of screws, so that the flanges are axially forced against each other. Thereby, the conical surface of the outer clamping ring 14 will cooperate with the conical surface of the inner clamping ring 16 for providing a further pressing of the inner clamping ring against the hose which is thereby sealingly forced against the outer surface of the pipe-shaped element 6. The conical engagement surfaces of the pipe element 4 and the sealing ring 28 provide in a corresponding way that the inner surface 32 of the sealing ring 28 is pressed against the outer surface of the pipe-shaped element 6 so that a positive sealing function is provided between the pipe element and the sealing ring on one side and between the pipe-shaped element 6 and the sealing ring on the other side. Because of the intermediate ring 26 positioned between the sealing ring 28 and the inner clamping ring 16 the inner clamping ring 16 is prevented from being displaced by the outer clamping ring 14 during the axial tightening of the flanges 22 and 24 which provides that the tightening of the flanges surely provides an increased pressing of the inner clamping ring 16 against the hose 2.

When the interior of the hose 2 and the pipe element 4 is supplied with a pressure medium the hose and the pipe-shaped element 6 positioned therein strives to be displaced to the left in Fig. 1, the thickened portion 8 of the pipe-shaped element thereby excerting a force on the sealing ring 22 and the intermediate ring 26 acting for forcing the inner clamping ring 16 further into the outer clamping ring 14 so that the pressure of the inner clamping ring 16 on the hose is further increased.

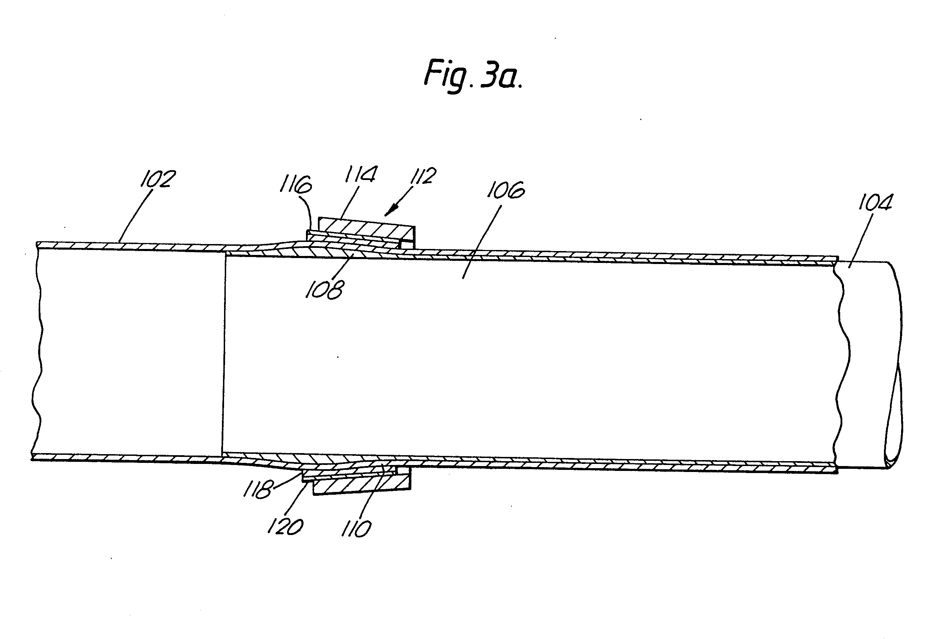

The device shown in Fig. 3a is adapted to provide a connection between a hose 102 and a pipe element 104. The hose 102 is of the same type as the hose 2 in the embodiment according to Fig. 1 and thus, the hose 102 is relatively thin-walled. Also this hose is adapted to constitute a lining in a damaged piping or the like. In a previously known manner the hose 102 can consist of an inner sealing layer and an outer pressure receiving layer and optionally an outer protective layer.

5

Like in the embodiment according to Fig. 1 the pipe element 104 is preferably constituted by a pipe coupling intended to be connected with an undamaged portion of the piping to which the hose 102 drawn into the damaged portion has be to sealingly connected in order to restoring the piping as a whole in a tight condition. Also in this case it is possible to let the pipe element constitute the end portion of the undamaged portion of the piping.

The device according to the invention shown in Fig. 3a comprises a pipe-shaped portion 106 of the pipe element 104 positioned inside the thin-walled hose 102, the pipe-shaped portion 106 having a thickened portion 108 forming a conical outer surface 110. The device also comprises a clamping device 112 enclosing a portion of the hose 102 and forcing this portion against the pipe-shaped portion 106. The clamping device 112 consists of two portions, an outer clamping ring 114 and an inner clamping ring 116. The clamping rings 114 and 116 engage each other along conical surfaces, and it is realized that it is possible to provide a reduction of the inner diameter of the clamping device by axially displacing the two clamping rings 114 and 116 in relation to each other along the conical surface in order to provide that the hose 102 is forced against the portion 106 of the pipe element 104. The inner clamping ring 116 comprises an inner portion 118 of an elastomeric material, for example rubber, and an outer portion 120 consisting of a rigid material, for example sheet metal or plastic, which is axially slotted at one or several points. Because of the construction of the clamping ring 116 in accordance with this description the clamping ring will have a changeable diameter in spite of the fact that it comprises a rigid material.

The connection of the hose 102 with the pipe element 104 by means of the device according to the invention is conducted as follows.

The two clamping rings 114 and 116 of the clamping device 112 are separately positioned on the hose 102 which is thereupon forced over the portion 106 of the pipe element 104 so far that the hose extends beyond the thickened portion 108. Thereby, the clamping rings are positioned to the left of the pipe element 104 and the thickened portion 108 thereof.

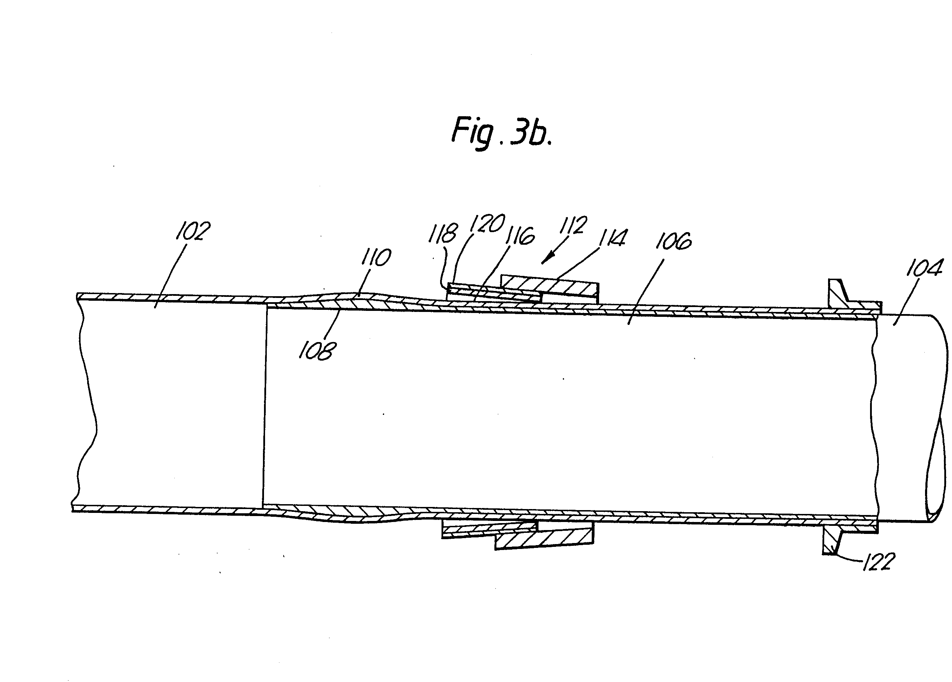

Thereupon, the two clamping rings 112 and 114 are separately displaced in the axial direction to the right according to Fig. 3a, i.e. to the portion of the hose 102 which is positioned outside the portion 106 of the pipe element to the right of the thickened portion 108. Thereby, the clamping rings of the clamping device have taken the position shown in Fig. 3b. Thereupon the two clamping rings 114 and 116 are displaced towards each other along the conical surfaces of the rings providing that the diameter of the inner clamping ring is reduced so far that the slots of the outer portion of the inner clamping ring disappear.

After the clamping rings 114 and 116 have been connected with each other in this way the clamping device 112 constituted by the rings is displaced towards and onto the conical outer surface 110 of the thickened portion 108 to the position shown in Fig. 3a.

The assembling of the rings as well as the displacement of the clamping device as a whole are preferably conducted by means of a mounting tool. In order to prevent displacement of the hose when the clamping device 112 is forced onto the conical surface 110 a pipe clamp 122 or other type of clamping device can retain the hose on the pipe element. If desired, the pipe clamp 122 can constitute a holder-on for the mounting tool when the clamping device 112 is displaced onto the conical surface 110. Thus, the pipe clamp 122 does not have any sealing function but constitute assistance means during the mounting of the device. Thus, the pipe clamp 122 is removed after the clamping device 112 has been positioned. A suitable tool for displacing the clamping device 112 onto the conical surface 110 can be provided with two jaws which are introduced between the opposing surfaces of the pipe clamp 122 and the clamping device 112 whereupon the draws are manually or by hydraulic force separated so that the clamping device 112 is displaced from the pipe clamp 122 and thereupon onto the conical surface 110.

When pressure is applied to the hose 102 and the pipe element 104 connected therewith the hose and the pipe element strive to be displaced from each other leading to a displacement of the clamping device 112 further onto the conical surface 110 in order to increase the pressing of the hose against the conical surface as the clamping device 112 is due to its high friction against the hose retained thereon in unchanged position.

The devices according to the invention described above can be used for hoses which have very thin walls in relation to their diameters which is of great advantage in the application described above. The construction of the clamping devices 12 and 112 provides that the hose will not be shrinkled and also provides that clamping damages to the hose are obviated. The clamping devices according to the invention also have the capacity of adapting to great tolerances.

The invention can be modified within the scope of the following claims.

CLAIMS

1. A device for connecting a preferably thin-walled hose (2; 102) with a pipe-shaped element (6; 106) which is positioned inside the hose, comprising a clamping device (12; 112) adapted to enclose a portion of the hose and force said portion against the pipe-shaped element, c h a r a c t e r i z e d in that the clamping device (12; 112) comprises two clamping rings, an outer clamping ring (14; 114) and an inner clamping ring (16; 116), contacting each other at conical surfaces, the inner clamping ring being adapted to engage the hose (2; 102) and to be forced against the hose by axial displacement of the outer clamping ring in relation to the inner clamping ring along the conical surfaces.

2. A device as claimed in claim 1, c h a r a c t e r i z e d in that the inner clamping ring (16; 116) has a high friction against the hose at its inner surface contacting the hose (2; 102).

3. A device as claimed in claim 2, c h a r a c t e r i z e d in that the inner surface contacting the hose (2; 102) is constituted by an elastomeric material layer.

4. A device as claimed in any of the preceding claims, c h a r a c t e r - i z e d in that the inner clamping ring (16; 116) comprises an inner portion (18; 118) of radially expansible material and an axially at least partially slotted outer portion (20; 120) of rigid material.

5. A device as claimed in any of the preceding claims, c h a r a c t e r - i z e d in that the pipe-shaped element (6) is constituted by a support sleeve.

6. A device as claimed in claim 5, c h a r a c t e r i z e d in that the outer clamping ring (14B is provided with a connecting portion (22), for example a flange, for connecting the outer clamping ring and thereby the hose to a pipe element (4), for example a pipe coupling.

7. A device as claimed in claims 5 and 6, c h a r a c t e r i z e d by an annular sealing and supporting device (26, 28) positioned between the clamping device (12) and the pipe element (4) and engaging the support element (6) for sealing the space between the support sleeve and the pipe element and for constituting a retainer portion when axially tightening the outer clamping ring (14) and the pipe element in order to provide an accompanying axial tightening of the inner and outer clamping rings (14 and 16, respectively) of the clamping device (12).

8. A device as claimed in claim 7, c h a r a c t e r i z e d  in that the annular sealing and supporting device (26, 28) and the pipe element (4) engages each other at conical surfaces in order to provide that the sealing and supporting device is forced against the support sleeve (6) during the axial tightening of the outer clamping ring (14) and the pipe element (4).

9. A device as claimed in claim 7 or 8, c h a r a c t e r i z e d  in that the annular sealing and supporting device (26, 28) comprises sealing means (34) at its surfaces (30, 32) engaging the support sleeve and the pipe end section.

C178274

**Fig. 1.**

**Fig. 2.**

Fig. 3a.

Fig. 3b.